# FASCICULE DE BREVET EUROPEEN

(11) **EP 3 996 892 B1**
(45) Date de publication et mention de la délivrance du brevet: **30.08.2023**
(21) Numéro de dépôt: 20747060.0
(22) Date de dépôt: 01.07.2020
(51) Int. Cl.: B29B 11/16, F01D 5/28, D03D 25/00, D03D 11/00, D03D 15/00, B29L 31/08

(54) **PROCÉDÉ DE FABRICATION D'UNE PRÉFORME FIBREUSE DE RENFORT DE PIÈCES EN MATÉRIAU COMPOSITE A FORTE VARIATION LOCALE D'ÉPAISSEUR**
VERFAHREN ZUR HERSTELLUNG EINER FASERVORFORM ZUR VERSTÄRKUNG VON TEILEN AUS VERBUNDWERKSTOFF MIT HOHER LOKALER DICKENVARIATION
PROCESS FOR MANUFACTURING A FIBROUS PREFORM FOR REINFORCEMENT OF PARTS MADE OF COMPOSITE MATERIAL WITH A HIGH LOCAL VARIATION IN THICKNESS

(30) Priorité: 10.07.2019 FR 1907716
(43) Date de publication de la demande: 18.05.2022
(73) Titulaire: Safran Ceramics, 33185 Le Haillan (FR)
(72) Inventeur: TESSON, Thierry, Guy, Xavier, 77550 MOISSY-CRAMAYEL (FR); LEFEBVRE, Marie, 77550 MOISSY-CRAMAYEL (FR); MARSAL, David, Mathieu, Paul, 77550 MOISSY-CRAMAYEL (FR)
(74) Mandataire: Cabinet Beau de Loménie
(86) Numéro de dépôt international: PCT/FR2020/051153
(87) Numéro de publication internationale: WO 2021/005286

(56) Documents cités:
- EP-A2- 2 706 240
- EP-A2- 2 706 241
- WO-A1-2014/053751
- FR-A1- 3 046 563
- FR-A1- 3 046 564

## Description

### Domaine Technique

La présente invention concerne la réalisation de pièces en matériau composite et plus particulièrement la réalisation par tissage tridimensionnel (3D) ou multicouche de textures fibreuses de renfort pour de telles pièces.

### Technique antérieure

Un domaine d'application de l'invention est la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

L'invention concerne plus particulièrement les pièces en matériau composite comportant localement une ou plusieurs parties de surépaisseur comme c'est le cas par exemple du pied d'une aube de moteur aéronautique qui correspond à une zone de forte variation d'épaisseur dans la pièce en matériau composite. Dans le cas d'une pièce en matériau composite présentant une épaisseur évolutive, le changement d'épaisseur est contrôlé au niveau de la texture fibreuse destinée à former le renfort de la pièce.

La réalisation d'aubes en matériau composite pour des turbomachines a déjà été proposée. On se référera notamment aux documents US 7 101 154 et US 2011/0311368 qui décrivent une solution consistant à augmenter le titre (donc la section transversale) des fils dans les parties de surépaisseur dans la texture fibreuse afin de réduire la capacité de diminution d'épaisseur lors d'une mise en forme de la texture fibreuse 3D avec compression. Cependant, l'utilisation de fils de titre élevé augmente localement le taux de fibres dans la préforme. Si le taux de fibres est trop important, le réseau de porosité résultant peut ne pas être suffisant pour permettre un bon accès des constituants de la matrice au coeur de la préforme et pour obtenir, par conséquent, un matériau composite homogène présentant de bonnes propriétés mécaniques.

Les documents FR 3 046 563 A1 et FR 3 046 564 A1 divulguent un procédé de fabrication d'une préforme fibreuse pour pièce en matériau composite, le procédé comprenant les étapes de réalisation d'une texture fibreuse par tissage tridimensionnel ou multicouche entre une pluralité de couches de trame et de couches de chaîne, la texture fibreuse comprenant une partie de surépaisseur, de placement de la texture fibreuse dans un outillage de formage et de mise en forme de la texture fibreuse de manière à obtenir une préforme fibreuse.

### Exposé de l'invention

Il est donc souhaitable de pouvoir disposer de préformes fibreuses 3D ou multicouches comportant des parties de surépaisseur ne présentant pas les inconvénients précités.

A cet effet, selon l'invention, il est proposé un procédé de fabrication d'une préforme fibreuse pour pièce en matériau composite, le procédé comprenant les étapes suivantes :
- réalisation d'une texture fibreuse par tissage tridimensionnel ou multicouche entre une pluralité de couches de trame et de couches de chaîne, la texture fibreuse comprenant une partie de surépaisseur comportant une partie sacrificielle et une partie utile adjacente à ladite partie sacrificielle dans la direction chaîne, la partie sacrificielle,
- placement de la texture fibreuse dans un outillage de formage,
- mise en forme de la texture fibreuse de manière à obtenir une préforme fibreuse comportant une partie sacrificielle et une partie utile adjacentes,
- retrait de la partie sacrificielle de la préforme fibreuse,
procédé dans lequel, lors du tissage de l'ébauche fibreuse, un ou plusieurs éléments de foisonnement sont insérés dans les couches de trame situées à coeur de la partie sacrificielle de la texture fibreuse, chaque élément de foisonnement présentant une section supérieure à la section ou au titre des fils ou torons de trame présents dans la partie utile.

L'insertion d'éléments de foisonnement dans la partie sacrificielle au niveau des couches de trame à coeur de la texture fibreuse permet de faire foisonner ou gonfler la texture fibreuse de manière importante à la fois dans la partie sacrificielle mais également dans la partie utile. Par conséquent, il est possible d'obtenir un foisonnement ou un gonflement de la partie utile plus important. Sans la partie sacrificielle comprenant des éléments de foisonnement ayant une section supérieure à la section ou au titre des fils ou torons de trame présents dans la partie utile, il faudrait insérer dans la partie utile une grande quantité des fils ou torons à grande section afin d'atteindre l'épaisseur désirée comme c'est le cas pour les solutions de l'art antérieur. Cependant, dans ce cas, le taux de fibres dans la partie de surépaisseur devient trop élevé et peu compatible avec une densification et des caractéristiques mécaniques optimales. En effet, si le taux de fibres est trop important, il est plus difficile d'introduire un précurseur de matrice dans toute la porosité du renfort fibreux. En outre, si le taux de fibres est très important, la quantité de matrice déposée sera elle faible, ce qui peut dégrader les caractéristiques mécaniques du matériau composite obtenu.

Les éléments de foisonnement sont cantonnés à la partie sacrificielle, ce qui permet d'utiliser des fils ou torons dans la partie utile compatibles avec le taux de fibres visé. En d'autres termes, l'invention permet d'obtenir un foisonnement important dans la partie utile en utilisant des éléments de foisonnement qui sont localisés dans la partie sacrificielle, partie destinée à être éliminée de la préforme finale ultérieurement. Ainsi, la taille de section et la quantité des éléments de foisonnement peuvent être définies uniquement par rapport au besoin d'épaisseur dans la partie utile, la taille des fils ou torons présents dans la partie utile pouvant être définie uniquement pour atteindre le taux de fibres visé. On obtient ainsi une partie utile destinée qui répond à la fois aux exigences dimensionnelles en présentant l'épaisseur voulue et aux exigences de fabrication en ayant un taux de fibres maîtrisé compatible avec un procédé de densification et de bonnes propriétés mécaniques du matériau composite final.

Dans un exemple de réalisation, des tresses sont insérées dans les couches de trame situées à coeur de la partie sacrificielle de la texture fibreuse, chaque tresse présentant une section supérieure à la section ou au titre des fils ou torons de trame présents dans la partie utile.

Selon une caractéristique particulière, des couches de trame situées au voisinage des couches de trame comprenant les tresses comprennent des fils ou torons ayant un titre supérieur au titre des fils ou torons des couches de trame situées en peau de la partie sacrificielle.

Selon une autre caractéristique particulière, les tresses présentent une section correspondant à un titre de 5K (5000 filaments), les fils ou torons des couches de trame situées au voisinage des couches de trame comprenant les tresses comprennent des fils ou torons ayant un titre compris entre 1K (1000 filaments) et 4K (4000 filaments), les fils ou torons des couches de trame situées en peau de la partie sacrificielle ayant un titre de 0,5K (500 filaments).

Dans un autre exemple de réalisation, la partie sacrificielle et la partie utile comprennent le même nombre de fils de chaîne tissés continûment entre lesdites parties. La texture fibreuse de l'invention est entièrement textile (i.e. sans ajout d'insert) et les fils de cette dernière sont liés entre eux par tissage 3D ou multicouche ce qui permet à la structure d'être indélaminable.

L'invention a également pour objet un procédé de fabrication d'une pièce en matériau composite comprenant les étapes suivantes:
- réalisation d'une préforme fibreuse conformément au procédé de fabrication d'une préforme fibreuse selon l'invention,
- injection d'une composition liquide comprenant au moins un précurseur d'un matériau de matrice dans la préforme fibreuse,
- transformation de la composition liquide en matrice de manière à obtenir une pièce en matériau composite comprenant un renfort fibreux densifié par une matrice.

Le procédé peut être notamment utilisé pour la fabrication d'une aube de turbomachine en matériau composite, par exemple une aube de turbine notamment de turbine à gaz pour moteurs aéronautiques.

### Brève description des dessins

[Fig. 1] La figure 1 illustre de façon très schématique une ébauche fibreuse tissée tridimensionnelle destinée à la réalisation d'une texture fibreuse conformément à un mode de réalisation de l'invention,
[Fig. 2] La figure 2 est une vue en coupe chaîne à échelle agrandie représentant partiellement un plan d'une armure de tissage d'une partie de surépaisseur de la texture fibreuse de la figure 1,
[Fig. 3] La figure 3 est une vue schématique d'une texture fibreuse obtenue à partir de l'ébauche fibreuse de la figure 1,
[Fig. 4] La figure 4 est une vue schématique en perspective éclatée montrant un outillage de formage conformément à un mode de réalisation de l'invention et le placement de la texture fibreuse de la figure 3 à l'intérieur de celui-ci,
[Fig. 5] La figure 5 est une vue schématique en perspective de l'outillage de la figure 4 une fois monté,
[Fig. 6] La figure 6 est une vue schématique en perspective montrant le placement de l'outillage de formage de la figure 5 dans une presse et la réalisation d'une opération de formage par compactage,
[Fig. 7] La figure 7 montre le retrait d'une partie sacrificielle d'une préforme fibreuse obtenue après l'opération de formage de la figure 6,
[Fig. 8] La figure 8 illustre la préforme fibreuse de la figure 7 après retrait de la partie sacrificielle,
[Fig. 9] La montre une opération d'injection d'une composition liquide de précurseur de matrice dans la préforme fibreuse de la figure 8,
[Fig. 10] La est une vue schématique en perspective d'une aube en matériau composite obtenue conformément à un procédé de fabrication de l'invention.

### Description des modes de réalisation

L'invention s'applique d'une manière générale à la réalisation de préformes fibreuses aptes à constituer des renforts fibreux pour la fabrication de pièces en matériau composite, en particulier des aubes de moteurs aéronautiques, les pièces étant obtenues par densification des textures fibreuses par une matrice. La matrice est typiquement une résine, dans le cas de matériaux composites utilisés à température relativement peu élevée, typiquement jusqu'à 300 ° C, ou un matériau réfractaire tel que du carbone ou céramique dans le cas de composites thermostructuraux.

La préforme fibreuse de l'invention est obtenue à partie d'une texture fibreuse réalisée par tissage tridimensionnel ou par tissage multicouche.

Par "tissage tridimensionnel" ou "tissage 3D", on entend ici un mode de tissage par lequel certains au moins des fils de chaîne lient des fils de trame sur plusieurs couches de trame.

Par "tissage multicouche", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de la texture fibreuse par tissage 3D ou multicouche permet d'obtenir une liaison entre les couches, donc d'avoir une bonne tenue mécanique de la texture fibreuse et de la pièce en matériau composite obtenue, en une seule opération textile.

Il est avantageux de favoriser l'obtention, après densification, d'un état de surface exempt d'irrégularités importantes, c'est-à-dire un bon état de finition pour éviter ou limiter des opérations de finition par usinage ou pour éviter la formation d'amas de résine dans le cas de composites à matrice résine. A cet effet, dans le cas d'une texture fibreuse ayant une partie interne, ou coeur, et une partie externe, ou peau adjacente à une surface extérieure de la texture fibreuse, la peau est réalisée de préférence par tissage avec une armure de type toile, satin ou sergé afin de limiter les irrégularités de surface, une armure de type satin procurant en outre un aspect de surface lisse. Une variation d'armure de tissage en peau peut être réalisée à la surface extérieure de la texture fibreuse pour conférer des propriétés particulières voulues par exemple en passant d'une armure de type toile privilégiant une liaison serrée à une armure de type satin privilégiant un état de surface lisse.

Il est avantageux aussi pour obtenir des propriétés mécaniques aussi peu inhomogènes que possible au sein d'une pièce en matériau composite, de favoriser une densification de la texture fibreuse de renfort, avec un gradient de densification aussi faible que possible entre le coeur de la texture fibreuse et la peau de celle-ci, notamment dans le cas de densification CVI. A cet effet, pour favoriser l'accès au coeur de la préforme, le tissage à coeur peut être réalisé par tissage interlock, qui offre une communication aisée entre plusieurs couches de tissu.

Par "tissage interlock", on entend ici une armure de tissage 3D dont chaque couche de chaîne lie plusieurs couches de trames avec tous les fils de la même colonne de chaîne ayant le même mouvement dans le plan de l'armure.

On peut aussi réaliser le coeur et la peau par tissage multicouches avec des armures différentes, notamment une armure de type satin en coeur et une armure de type toile ou sergé en peau.

Il est possible aussi de faire varier l'armure de tissage tridimensionnel dans la partie de coeur, par exemple en combinant différentes armures interlock, ou une armure interlock et une armure de tissage multicouches, ou encore différentes armures de tissage multicouches. Il est possible encore de faire varier l'armure de tissage en peau le long de la surface extérieure.

Il peut être souhaitable d'utiliser des fils de natures chimiques différentes entre différentes parties de la texture fibreuse, notamment entre coeur et peau pour conférer des propriétés particulières à la pièce en matériau composite obtenue, notamment en termes de résistance à l'oxydation ou à l'usure.

Ainsi, dans le cas d'une pièce en matériau composite thermostructural à renfort de fibres réfractaires, on pourra utiliser une préforme avec des fibres carbone dans le coeur et des fibres en céramique, par exemple en carbure de silicium (SiC), en peau afin d'accroître la résistance à l'usure et à l'oxydation de la pièce composite au niveau de cette partie de peau.

Un exemple de réalisation d'une texture fibreuse conformément à l'invention est maintenant décrit. Dans cet exemple, le tissage est réalisé sur un métier de type Jacquard.

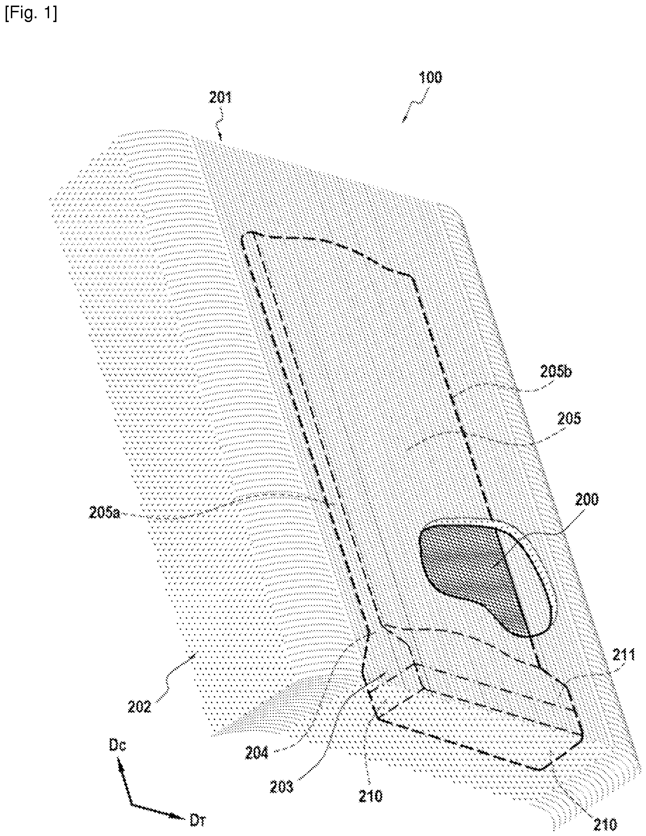

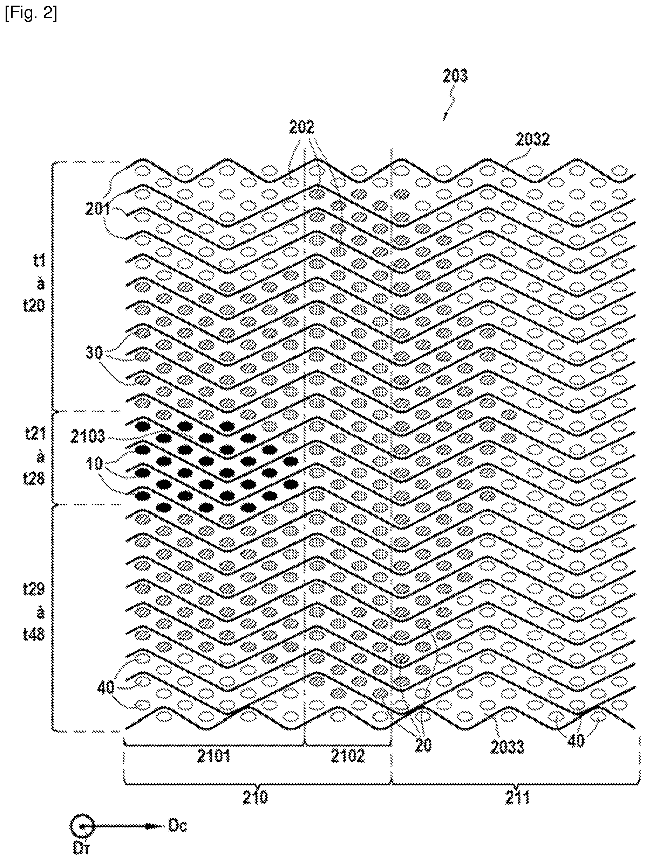

La figure 1 montre très schématiquement une ébauche fibreuse 100 à partir de laquelle est obtenue une texture fibreuse 200 (figure 2) destinée à former le renfort fibreux d'une aube de moteur aéronautique.

L'ébauche 100 de la texture fibreuse 200 est obtenue par tissage tridimensionnel, ou tissage 3D, ou par tissage multicouche réalisé de façon connue au moyen d'un métier à tisser de type jacquard sur lequel on a disposé un faisceau de fils de chaînes ou torons 201 en une pluralité de couches, les fils de chaînes étant liés par des couches de trame 202 également disposés en une pluralité de couches, certaines couches de trames comprenant des tresses comme expliqué ci-après en détails. Un exemple détaillé de réalisation d'une préforme fibreuse destinée à former le renfort fibreux d'une aube pour moteur aéronautique est notamment décrit en détail dans les documents US 7 101 154, US 7 241 112 et WO 2010/061140.

L'ébauche fibreuse 100 est tissée sous forme d'une bande s'étendant de façon générale dans une direction D_{C} correspondant à la direction des fils de chaîne 201 et de la direction longitudinale de l'aube à réaliser. Dans l'ébauche fibreuse 100, la texture fibreuse présente une épaisseur variable à la fois dans la direction D_{C} et dans une direction D_{T} perpendiculaire à la direction D_{C} et correspondant à la direction des fils de trame 202. Les variations d'épaisseur sont déterminées en fonction de l'épaisseur longitudinale et du profil de la pale de l'aube à réaliser. Dans sa partie destinée à former une préforme de pied, la texture fibreuse 200 présente dans la direction D_{C} une partie de surépaisseur 203 déterminée en fonction de l'épaisseur du pied de l'aube à réaliser. La texture fibreuse 200 se prolonge par une partie d'épaisseur décroissante 204 destinée à former l'échasse de l'aube puis par une partie 205 destinée à former la pale de l'aube. La texture fibreuse 200 est tissée en une seule pièce et doit présenter, après découpe des fils non tissés, la forme et les dimensions quasi-définitives de l'aube (« net shape »). A cet effet, dans les parties de variations d'épaisseur de la texture fibreuse, comme dans la partie d'épaisseur décroissante 204, la diminution d'épaisseur de la préforme est obtenue en retirant progressivement des couches de trame au cours du tissage.

Conformément à l'invention, la texture fibreuse 200 comporte, au niveau de la partie de surépaisseur 203, une partie sacrificielle 210 présente à l'extrémité inférieure de la texture et une partie utile 211 adjacente à la partie sacrificielle 210 suivant la direction de chaîne D_{C}. Toujours conformément à l'invention, un ou plusieurs éléments de foisonnement sont insérés dans les couches de trame situées à coeur de la partie sacrificielle 203 de la texture fibreuse 200, chaque élément de foisonnement présentant une section supérieure à la section ou au titre des fils ou torons de trame présents dans la partie utile 211. Comme expliqué ci-après, la partie sacrificielle 210 est destinée à être éliminée de la préforme fibreuse obtenue après mise en forme de la texture fibreuse afin de ne laisser subsister dans celle-ci que la partie utile 211 qui est destinée à former le pied d'aube.

La figure 2 est une vue partielle agrandie d'un plan en coupe chaîne d'une armure de tissage de la partie de surépaisseur 203 de la texture fibreuse 200 comportant la partie sacrificielle 210 et la partie utile 211 obtenues par tissage 3D. Dans cet exemple, la texture fibreuse 200 comprend, dans sa partie de surépaisseur 203, 48 couches de trame, soit 24 demi-couches t1 à t48. Dans le coeur 2103 situé entre les peaux opposées 2032 et 2033, les couches de trame sont liées entre par des fils de chaîne 201 suivant un tissage 3D est de type interlock. Dans les peaux 2032 et 2033 le tissage entre les fils de chaîne 201 et les fils de trame 202 est bidimensionnel avec une armure de type satin irrégulier. Le tissage satin ne concerne que les demi-couches de trame t1 et t2 et les demi-couches de trame t47 et t48. On notera que le tissage 3D interlock du coeur s'étend jusqu'aux demi-couches extrêmes t1, t48 des peaux afin de lier ces demi-couches à celles du coeur.

Dans l'exemple décrit ici, la partie sacrificielle 210 comporte une première zone 2101 du côté opposé de la partie utile 211 suivant la direction chaîne D_{C} et une deuxième zone 2102 adjacente à la fois à la première zone 2101 et la partie utile 211. Dans première zone 2101, des tresses 10 sont utilisées dans les couches de trames les plus à coeur de la texture fibreuse 200. Dans l'exemple décrit ici, des tresses 10 sont utilisées en tant qu'éléments de foisonnement dans les demi-couches t21 à t28. Les tresses 10 présentent une section ou un diamètre 1,55 mm. Tous les autres fils ou torons de trame présents dans les couches de trame de la partie de surépaisseur 203 ont un titre correspondant à une section inférieure à celle des tresses. La partie de surépaisseur 203 comprend ici des fils ou torons 20, 30 et 40 ayant respectivement un titre de 2K (2000 filaments), 1,5K (1500 filaments) et 0,5K (500 filaments), correspondant respectivement à une section ou un diamètre de 0,41 mm, 0,30 mm et 0,15 mm.

L'insertion des tresses 10 dans la partie sacrificielle 210 au niveau des couches de trame à coeur de la texture fibreuse permet de faire foisonner ou gonfler la texture fibreuse de manière importante à la fois dans la partie sacrificielle 210 mais également dans la partie utile 211. En effet, le foisonnement de la partie sacrificielle 210 due à la présence des tresses se répercute dans la partie utile 211 adjacente notamment du fait que ces deux parties sont adjacentes et liées en elles par un tissage continu avec les fils de chaîne. Par conséquent, il est possible d'obtenir un foisonnement ou un gonflement de la partie utile plus important. Sans la partie sacrificielle comprenant des éléments de foisonnement ayant une section supérieure à la section ou au titre des fils ou torons de trame présents dans la partie utile, il faudrait insérer dans la partie utile une grande quantité des fils ou torons à grande section afin d'atteindre l'épaisseur désirée comme c'est le cas pour les solutions de l'art antérieur. Cependant, dans ce cas, le taux de fibres dans la partie de surépaisseur devient trop élevé et peu compatible avec une densification et des caractéristiques mécaniques optimales. En effet, si le taux de fibres est trop important, il est plus difficile d'introduire un précurseur de matrice dans toute la porosité du renfort fibreux. En outre, si le taux de fibres est très important, la quantité de matrice déposée sera elle faible, ce qui peut dégrader les caractéristiques mécaniques du matériau composite obtenu.

Les tresses sont cantonnées à la partie sacrificielle, ce qui permet d'utiliser des fils ou torons dans la partie utile compatibles avec le taux de fibres visé. En d'autres termes, l'invention permet d'obtenir un foisonnement important dans la partie utile en utilisant des éléments de foisonnement qui sont localisés dans la partie sacrificielle, partie destinée à être éliminée de la préforme finale ultérieurement. Ainsi, la taille de section et la quantité des éléments de foisonnement peuvent être définies uniquement par rapport au besoin d'épaisseur dans la partie utile, la taille des fils ou torons présents dans la partie utile pouvant être définie uniquement pour atteindre le taux de fibres visé. On obtient ainsi une partie utile destinée à former ici un pied d'aube qui répond à la fois aux exigences dimensionnelles en présentant l'épaisseur voulue et aux exigences de fabrication en ayant un taux de fibres maîtrisé, typiquement inférieur à 50%, compatible avec un procédé de densification et de bonnes propriétés mécaniques du matériau composite final.

Comme illustré à la figure 2, les couches de trame adjacentes à celles comprenant les tresses 10 comprennent des fils ou torons 30 ayant un titre compris entre 1K et 4K tandis que les couches de trame présentes en peau comprennent des fils ou torons ayant un titre de 0,5K. On diminue ainsi progressivement l'épaisseur sans créer de « trous » dans la texture fibreuse, ce qui permet une transition textile plus douce.

Dans la deuxième zone 2102 de la partie sacrificielle 210, les couches de trame comprennent majoritairement des fils ou torons ayant un titre 2K à l'exception des couches de trame présentes au voisinage des peaux qui comprennent des fils ou torons ayant un titre de 1,5K tandis que les couches de trame présentes en peau comprennent des fils ou torons ayant un titre de 0,5K. Cette répartition de titre ou taille de fils ou torons permet d'obtenir des transitions textiles plus douces évitant la création de trous tout en assurant un taux volumique de fibres et une épaisseur visés.

Dans la partie utile 211, les couches de trame situées en dessous des peaux comprennent majoritairement des fils ou torons 30 ayant un titre de 1,5K à la jonction avec la partie sacrificielle 210, les fils ou torons 30 étant progressivement remplacés par des fils ou torons 40 ayant un titre de 0,5K comme les fils ou torons de trame présents en peau.

La texture fibreuse selon l'invention peut être tissée notamment, mais non exclusivement, à partir de fils de fibres de carbone, de fibres céramique telle que du carbure de silicium, ou de fibres d'oxyde tel que de l'alumine.

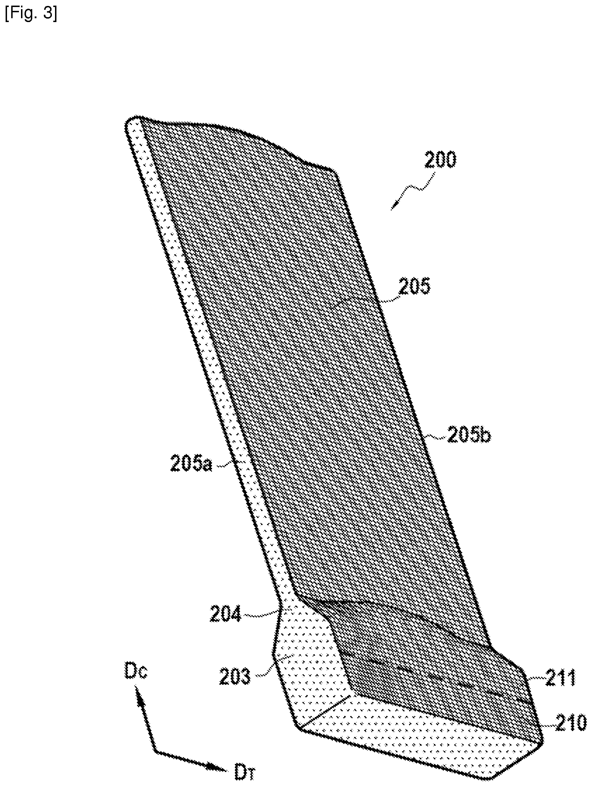

Une fois le tissage de la texture fibreuse 200 dans l'ébauche 100 achevé, on découpe les fils non tissés pour extraire la texture fibreuse. On obtient alors la texture fibreuse 200 illustrée sur la figure 3 et tissée en une seule pièce.

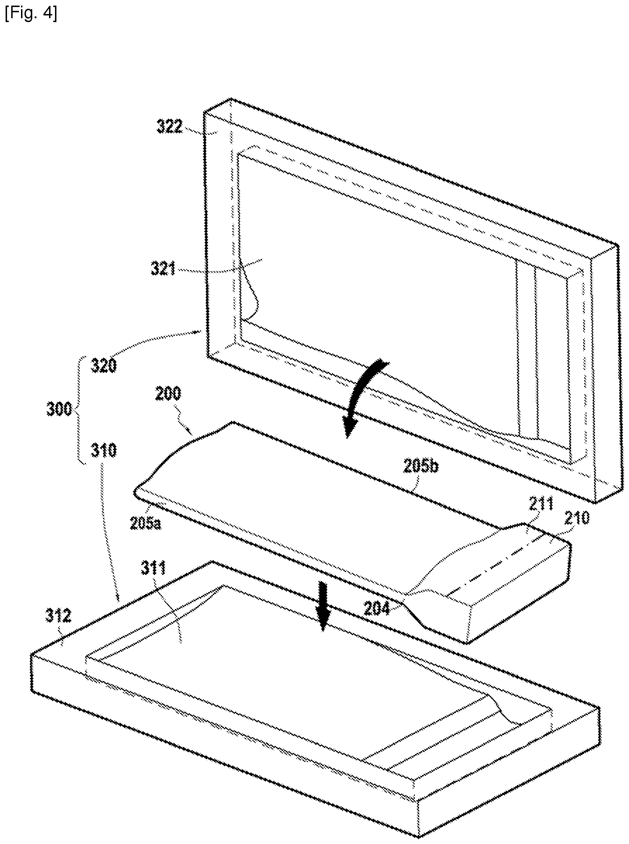

L'étape suivante consiste à mettre en forme par compactage la texture fibreuse 200 pour former une préforme fibreuse prête à être densifiée. A cet effet, la texture fibreuse est placée dans un outillage de formage 300 qui, comme illustré sur la figure 4, comprend une première coquille 310 comprenant en son centre une première empreinte 311 correspondant en partie à la forme et aux dimensions de l'aube à réaliser, l'empreinte 311 étant entourée par un premier plan de contact 312.

L'outillage 300 comprend également une deuxième coquille 320 comprenant en son centre une deuxième empreinte 321 correspondant en partie à la forme et aux dimensions de l'aube à réaliser, la deuxième empreinte 321 étant entourée d'un deuxième plan de contact 322 destiné à coopérer avec le premier plan de contact 312 de la première coquille 310.

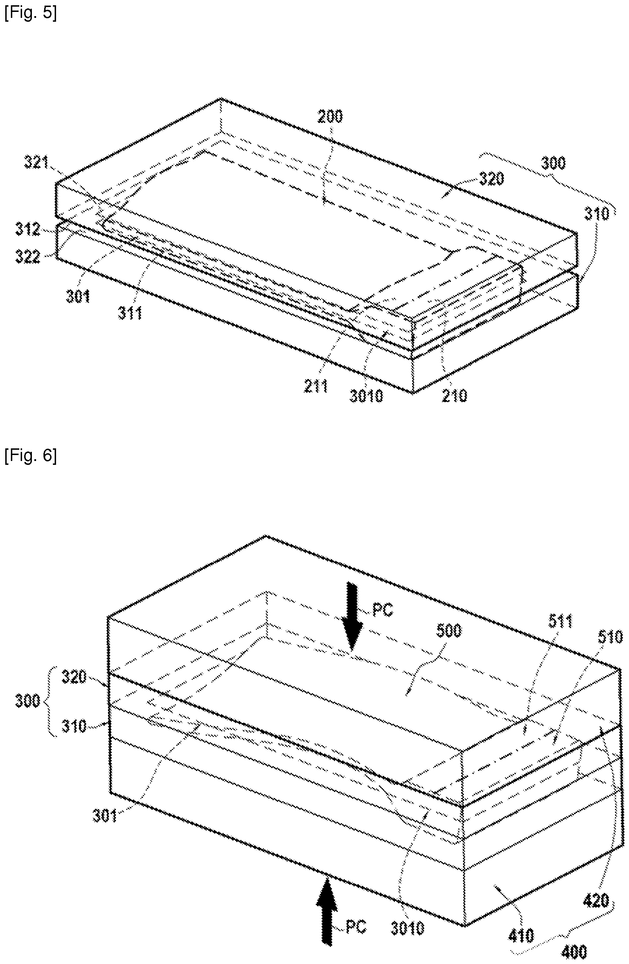

La texture fibreuse 200 est tout d'abord positionnée dans l'empreinte 311 de la première coquille 310, la deuxième coquille 320 étant ensuite posée sur la première coquille 310 afin de fermer l'outillage de formage 300. Une fois l'outillage 300 fermé comme illustré sur la figure 5, les première et deuxième coquilles sont dans une position dite « position d'assemblage », c'est-à-dire une position dans laquelle les première et deuxième empreintes 310, 320 sont placées en regard l'une de l'autre tandis que les premier et deuxième plans de contact 312 et 322 sont également en regard l'un de l'autre. Dans cette configuration, les première et deuxième empreintes 310, 320 définissent ensemble un volume interne 301 ayant la forme de l'aube à réaliser et dans lequel est placée la texture fibreuse 200. Dans l'exemple décrit ici, l'empreinte 311 est destinée à former le côté intrados de la préforme fibreuse d'aube tandis que l'empreinte 321 est destinée à former le côté extrados de la préforme d'aube. Grâce à la présence de la partie sacrificielle 210 adjacente à la partie utile 210, cette dernière présente une épaisseur suffisante pour remplir la partie élargie 3010 du volume interne 301 destinée à conformer le pied d'aube.

Sur la figure 6, l'outillage de formage 300 avec la texture fibreuse 200 à l'intérieur de celui-ci est placé dans une presse de compactage 400. La presse 400 comprend une partie inférieure 410 sur laquelle repose la première coquille 310 de l'outillage de formage 300 et une partie supérieure 420 placée sur la deuxième coquille 320 de l'outillage de formage 300.

Comme représenté sur la figure 6, l'outillage de formage 300 est soumis à l'application d'une pression de compactage PC appliquée par la presse 400. L'application de la pression PC entraine le rapprochement des première et deuxième coquilles 310 et 320 jusqu'à ce que les premier et deuxième plans de contact 312 et 322 se rejoignent, ce qui permet à la fois de compacter la texture fibreuse 200 selon un taux de compaction déterminé afin d'obtenir un taux de fibres également déterminé et de mettre en forme la texture fibreuse suivant le profil de l'aube à fabriquer. On obtient alors une préforme fibreuse 500 présentant la forme de l'aube à réaliser et comportant une partie sacrificielle 510 correspondant à la partie sacrificielle 210 de la texture fibreuse 200 et une partie utile 511 adjacente correspondant à la partie utile 211 de la texture 200.

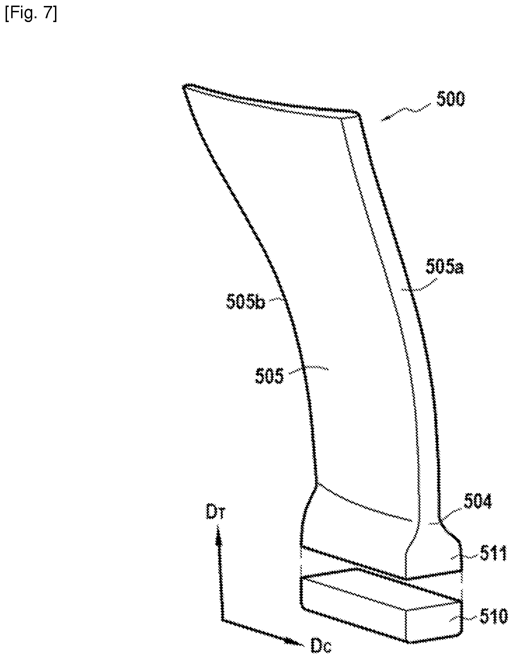

On extrait alors la préforme fibreuse 500 de l'outillage 300 afin de procédé au retrait de la partie sacrificielle 510 comme illustré sur la figure 7. La partie sacrificielle peut être retirée par usinage conventionnel tel qu'un tronçonnage avec un outil diamanté par exemple

On obtient alors une préforme fibreuse 500 dont l'extrémité inférieure comporte seulement la partie utile 511 en tant que partie de surépaisseur destinée à former le pied d'aube. La partie utile 511 est prolongée par une partie d'épaisseur décroissante 504 correspondant à la partie 204 de la texture fibreuse 200. La préforme 500 comprend également une partie de pale 505 correspondant à la partie 205 de la texture fibreuse 200 qui s'étend suivant la direction DT entre une partie de bord d'attaque 505a et une partie de borde de fuite 505b correspondant respectivement aux bords 205a et 205b de la texture fibreuse 200.

On procède ensuite à la densification de la préforme fibreuse. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification est réalisée de façon connue en soi suivant le procédé par voie liquide (CVL). Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

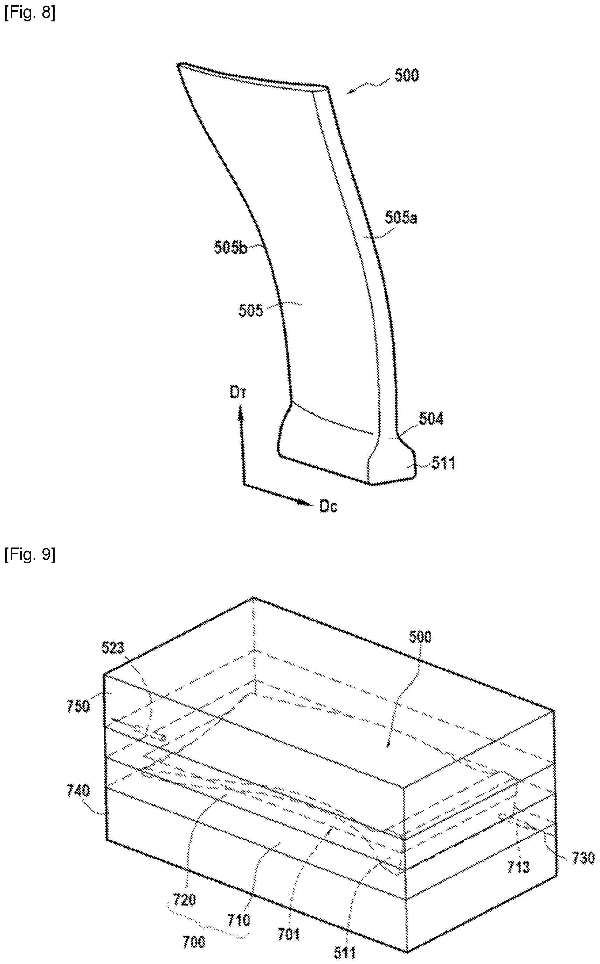

L'injection d'une composition liquide précurseur de matrice dans la texture fibreuse ainsi que sa transformation en matrice sont réalisées dans un outillage d'injection 700 représenté sur la figure 9. De même que pour l'outillage de formage 300, l'outillage d'injection 700 comprend une première coquille 710 comprenant en son centre une première empreinte correspondant en partie à la forme et aux dimensions de l'aube à réaliser et une deuxième coquille 720 comprenant en son centre une deuxième empreinte correspondant en partie à la forme et aux dimensions de l'aube à réaliser. Une fois l'outillage 700 fermé comme illustré sur la figure 9, les première et deuxième empreintes respectivement des première et deuxième coquilles 710 et 720 définissent ensemble un volume interne 701 ayant la forme de l'aube à réaliser et dans lequel est placée la préforme fibreuse 500.

L'outillage 700 comprend en outre des moyens permettant de réaliser l'injection d'un précurseur liquide de matrice et la transformation de ce précurseur en matrice. Plus précisément, dans l'exemple décrit ici, la première coquille 710 de l'outillage 700 comprend un port d'injection 713 destiné à permettre l'injection d'une composition liquide précurseur de matrice dans la préforme fibreuse tandis que la deuxième coquille comprend un port d'évacuation 723 destiné à coopérer avec un système de pompage pour la mise sous vide de l'outillage et le tirage d'air lors de l'injection. L'outillage d'injection 700 comprend également une partie inférieure 740 et une partie supérieure 750 entre lesquels les première et deuxième coquilles 710 et 720 sont placées, la partie inférieure 740 et la partie supérieure 750 étant équipées de moyens de chauffage (non représentés sur la figure 9).

Une fois l'outillage 700 fermé, on procède au moulage de l'aube en imprégnant la préforme 500 avec une résine thermodurcissable que l'on polymérise par traitement thermique. On utilise à cet effet le procédé bien connu de moulage par injection ou transfert dit RTM ("Resin Transfert Moulding"). Conformément au procédé RTM, on injecte via le port d'injection 713 de la première coquille 710 une résine 730, par exemple une résine thermodurcissable, dans le volume interne occupé par la préforme 500. Le port 723 de la deuxième coquille 720 est relié à un conduit d'évacuation maintenu sous pression (non représentés sur la figure 9). Cette configuration permet l'établissement d'un gradient de pression entre la partie inférieure de la préforme 500 où la résine est injectée et la partie supérieure de la préforme située à proximité du port 723. De cette manière, la résine 730 injectée sensiblement au niveau de la partie inférieure de la préforme va imprégner progressivement l'ensemble de la préforme en circulant dans celle-ci jusqu'au port d'évacuation 723 par lequel le surplus est évacué. Bien entendu, les première et deuxième coquilles 710 et 720 de l'outillage 700 peuvent comprendre respectivement plusieurs ports d'injection et plusieurs ports d'évacuation.

La résine utilisée peut être, par exemple, une résine époxyde de classe de température 180 °C (température maximale supportéesans perte de caractéristiques). Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, l'aube est démoulée. Elle peut éventuellement subir un cycle de post-cuisson pour améliorer ses caractéristiques thermomécaniques (augmentation de la température de transition vitreuse). Au final, l'aube est détourée pour enlever l'excès de résine et les chanfreins sont usinés. Aucun autre usinage n'est nécessaire puisque, la pièce étant moulée, elle respecte les cotes exigées.

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

La densification de la préforme peut encore être réalisée par imprégnation d'une barbotine (« slurry cast »), contenant par exemple du SiC et des liants organiques, suivie d'une infiltration avec du silicium liquide (« Melt infiltration »).

Les procédés de densification décrits ci-avant permettent de réaliser, à partir de la texture fibreuse de l'invention, principalement des pièces en matériau composite à matrice organique (CMC), à matrice carbone (C/C) et à matrice céramique (CMC).

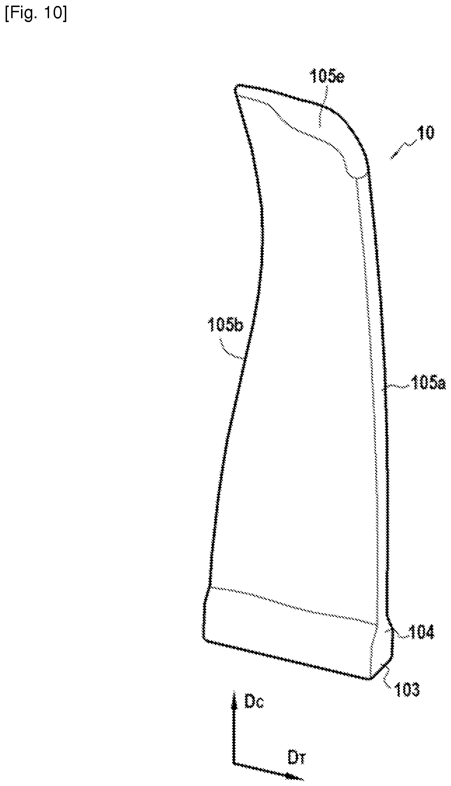

Comme illustrée sur la figure 10, on obtient une aube 100 formée d'un renfort fibreux densifié par une matrice qui comporte dans sa partie inférieure un pied 103 formé par la partie utile 511 de la préforme fibreuse 500 qui se prolonge par une échasse 104 formée par la partie d'épaisseur décroissante 504 de la préforme 500 et une pale 105 formée par la partie de pale 505 de la préforme fibreuse 500. La pale 105 comporte un bord d'attaque 105a et un bord de fuite 105b correspondant respectivement aux parties de bord d'attaque 505a et de bord de fuite 505b de la préforme fibreuse 500.

La texture fibreuse et son procédé de fabrication selon la présente invention peuvent notamment être utilisés pour réaliser des aubes de turbomachine présentant une géométrie plus complexe que l'aube représentée sur la figure 10, comme des aubes comportant, en outre de celle de la figure 10, une ou plusieurs plateformes permettant de réaliser des fonction comme celles d'étanchéité de veine, d'anti-basculement, etc..

Dans un autre exemple de réalisation, un ou plusieurs pions peuvent être insérés dans les couches de trame situées à coeur de la partie sacrificielle de la texture fibreuse en tant qu'élément de foisonnement. Chaque pion présente une section supérieure à la section ou au titre des fils ou torons de trame présents dans la partie utile.

## Revendications

1. Procédé de fabrication d'une préforme fibreuse pour pièce en matériau composite, le procédé comprenant les étapes suivantes :
- réalisation d'une texture fibreuse (200) par tissage tridimensionnel ou multicouche entre une pluralité de couches de trame (t1-t48) et de couches de chaîne (201), la texture fibreuse (200) comprenant une partie de surépaisseur (203) comportant une partie sacrificielle (210) et une partie utile (211) adjacente à ladite partie sacrificielle dans la direction chaîne, la partie sacrificielle (203),
- placement de la texture fibreuse (200) dans un outillage de formage (300),
- mise en forme de la texture fibreuse (200) de manière à obtenir une préforme fibreuse (500) comportant une partie sacrificielle (510) et une partie utile (511) adjacentes,
- retrait de la partie sacrificielle (510) de la préforme fibreuse,
procédé dans lequel, lors du tissage de l'ébauche fibreuse, un ou plusieurs éléments de foisonnement sont insérés dans les couches de trame (t21-t28) situées à coeur (2103) de la partie sacrificielle (210) de la texture fibreuse (200), chaque élément de foisonnement présentant une section supérieure à la section ou au titre des fils ou torons de trame présents dans la partie utile (211).

2. Procédé selon la revendication 1, dans lequel lors du tissage de l'ébauche fibreuse, des tresses (10) sont insérées dans les couches de trame (t21-t28) situées à coeur (2103) de la partie sacrificielle (210) de la texture fibreuse (200), chaque tresse présentant une section supérieure à la section ou au titre des fils ou torons de trame présents dans la partie utile (211).

3. Procédé selon la revendication 2, dans lequel des couches de trame (t11-t20 ; t27-t36) situées au voisinage des couches de trame (t21-t28) comprenant les tresses (10) comprennent des fils ou torons (30) ayant un titre supérieur au titre des fils ou torons (40) des couches de trame (t1-t10 ; t36-t48) situées en peau (2032 ; 2033) de la partie sacrificielle (210).

4. Procédé selon la revendication 3, dans lequel les tresses (10) présentent une section correspondant à un titre de 5K (5000 filaments), les fils ou torons des couches de trame situées au voisinage des couches de trame comprenant les tresses comprennent des fils ou torons (30, 20) ayant un titre compris entre 1K (1000 filaments) et 4K (4000 filaments), les fils ou torons (40) des couches de trame situées en peau (2032 ; 2033) de la partie sacrificielle (210) ayant un titre de 0,5K (500 filaments).

5. Procédé selon l'une quelconque des revendications 2 à 4, dans lequel la partie sacrificielle (210) et la partie utile (211) comprennent le même nombre de fils de chaîne tissés continûment entre lesdites parties.

6. Procédé selon la revendication 1, dans lequel lors du tissage de l'ébauche fibreuse, au moins un pion est inséré dans les couches de trame situées à coeur de la partie sacrificielle de la texture fibreuse, chaque pion présentant une section supérieure à la section ou au titre des fils ou torons de trame présents dans la partie utile.

7. Procédé de fabrication d'une pièce en matériau composite comprenant les étapes suivantes:
- réalisation d'une préforme fibreuse (500) conformément au procédé de fabrication d'une préforme fibreuse selon l'une quelconque des revendications 1 à 6,
- injection d'une composition liquide (730) comprenant au moins un précurseur d'un matériau de matrice dans la préforme fibreuse (500),
- transformation de la composition liquide en matrice de manière à obtenir une pièce en matériau composite (100) comprenant un renfort fibreux densifié par une matrice.

8. Utilisation du procédé selon la revendication 7 pour la fabrication d'une aube de turbomachine en matériau composite (100).

## Patentansprüche

1. Verfahren zur Herstellung einer Faservorform für ein Teil aus Verbundwerkstoff, wobei das Verfahren die folgenden Schritte umfasst:
- Ausführung einer Fasertextur (200) durch dreidimensionales oder mehrschichtiges Weben zwischen mehreren Schussschichten (t1 - t48) und Kettschichten (201), wobei die Fasertextur (200) einen Überdickenteil (203), der einen Opferteil (210) und einen Nutzteil (211) beinhaltet, der zu dem Opferteil in der Kettrichtung benachbart ist, den Opferteil (203), umfasst,
- Platzierung der Fasertextur (200) in einem Formgebungswerkzeug (300),
- Formen der Fasertextur (200), derart dass eine Faservorform (500) erhalten wird, die einen Opferteil (510) und ein Nutzteil (511) beinhaltet, die zueinander benachbart sind,
- Entfernen des Opferteils (510) von der Faservorform, wobei in dem Verfahren beim Weben der Faserausgangsform ein oder mehrere Aufquellelemente in die Schussschichten (t21 - t28) eingeführt werden, die sich im Kern (2103) des Opferteils (210) der Fasertextur (200) befinden, wobei jedes Aufquellelement einen Querschnitt aufweist, der größer als der Querschnitt oder der Titer der in dem Nutzteil (211) vorhandenen Schussfäden oder -kardeele ist.

2. Verfahren nach Anspruch 1, wobei beim Weben der Faserausgangsform Geflechte (10) in die Schussschichten (t21 - t28) eingeführt werden, die sich im Kern (2103) des Opferteils (210) der Fasertextur (200) befinden, wobei jedes Geflecht einen Querschnitt aufweist, der größer als der Querschnitt oder der Titer der in dem Nutzteil (211) vorhandenen Schussfäden oder -kardeele ist.

3. Verfahren nach Anspruch 2, wobei die Schussschichten (t11 - 120; t27 - t36), die sich in der Nachbarschaft der Schussschichten (t21 - t28) befinden, die Geflechte (10) umfassen, Fäden oder Kardeele (30) umfassen, die einen Titer aufweisen, der größer als der Titer der Fäden oder Kardeele (40) der Schussschichten (t1 - t10; t36 - t48) ist, die sich an der Außenschicht (2032; 2033) des Opferteils (210) befinden.

4. Verfahren nach Anspruch 3, wobei die Geflechte (10) einen Querschnitt aufweisen, der einem Titer von 5 K (5000 Filamente) entspricht, die Fäden oder Kardeele der Schussschichten, die sich in der Nachbarschaft der Schussschichten befinden, die Geflechte umfassen, Fäden oder Kardeele (30, 20) umfassen, die einen Titer von zwischen 1 K (1000 Filamente) und 4 K (4000 Filamente) aufweisen, wobei die Fäden oder Kardeele (40) der Schussschichten, die sich an der Außenschicht (2032; 2033) des Opferteils (210) befinden, einen Titer von 0,5 K (500 Filamente) aufweisen.

5. Verfahren nach einem der Ansprüche 2 bis 4, wobei der Opferteil (210) und der Nutzteil (211) die gleiche Anzahl von Kettfäden umfassen, die ununterbrochen zwischen den Teilen gewebt sind.

6. Verfahren nach Anspruch 1, wobei beim Weben der Faserausgangsform mindestens ein Stift in die Schussschichten eingeführt wird, die sich im Kern des Opferteils der Fasertextur befinden, wobei jeder Stift einen Querschnitt aufweist, der größer als der Querschnitt oder der Titer der in dem Nutzteil vorhandenen Schussfäden oder -kardeele ist.

7. Verfahren zur Herstellung eines Teils aus Verbundwerkstoff, das die folgenden Schritte umfasst:
- Ausführen einer Faservorform (500) nach dem Verfahren zur Herstellung einer Faservorform nach einem der Ansprüche 1 bis 6,
- Einspritzen einer flüssigen Zusammensetzung (730), die mindestens ein Vorprodukt eines Matrixwerkstoffs umfasst, in die Faservorform (500),
- Umwandlung der flüssigen Zusammensetzung in Matrix, derart dass ein Teil (100) aus Verbundwerkstoff erhalten wird, das eine durch eine Matrix verdichtete Faserverstärkung umfasst.

8. Verwendung des Verfahrens nach Anspruch 7 zur Herstellung einer Turbinentriebwerksschaufel (100) aus Verbundwerkstoff.

## Claims

1. A manufacturing process of a fibrous preform for a composite material part, the process comprising the following steps:
- creating a fibrous texture (200) by three-dimensional or multilayer weaving between a plurality of weft layers (t1-t48) and warp layers (201), the fibrous texture (200) comprising an extra-thick portion (203) having a sacrificial portion (210) and a useful portion (211) adjacent to said sacrificial portion in the in the warp direction, the sacrificial portion (203),
- placing the fibrous texture (200) in a forming toolset (300),
- shaping the fibrous texture (200) so as to obtain a fibrous preform (500) having a sacrificial portion (510) and an adjacent useful portion (511),
- removing the sacrificial portion (510) from the fibrous preform, process in which, when weaving the fibrous blank, one or more expansion elements are inserted into the weft layers (t21-t28) located at the core (2103) of the sacrificial portion (210) of the fibrous texture (200), each expansion element having a cross-section greater than the cross-section or count of the weft threads or strands present in the useful portion (211).

2. Process according to claim 1, wherein when weaving the fibrous blank, braids (10) are inserted into the weft layers (t1-t28) located at the core (2103) of the sacrificial portion (210) of the fibrous texture (200), each braid having a cross-section greater than the cross-section or count of the weft threads or strands present in the useful portion (211).

3. Process according to claim 2, wherein weft layers (t11-t20; t27-t36) located near weft layers (t21-t28) comprising the braids (10) comprise threads or strands (30) having a count greater than the count of the threads or strands (40) of the weft layers (t1-t10; t36-t48) located in the skin (2032; 2033) of the sacrificial portion (210).

4. Process according to Claim 3, wherein the braids (10) have a cross-section corresponding to a count of 5K (5000 filaments), the threads or strands of the weft layers located near the weft layers comprising the braids comprise threads or strands (30, 20) having a count comprised between 1K (1000 filaments) and 4K (4000 filaments), the threads or strands (40) of the weft layers located in the skin (2032; 2033) of the sacrificial portion (210) having a count of 0.5K (500 filaments).

5. Process according to any one of claims 2 to 4, wherein the sacrificial portion (210) and the useful portion (211) comprise the same number of warp threads woven continuously between said parts.

6. Process according to claim 1, wherein when weaving the fibrous blank, at least one pin is inserted into the weft layers located at the core of the sacrificial portion of the fibrous texture, each pin having a cross-section greater than the cross-section or count of the weft threads or strands present in the useful portion.

7. Process for manufacturing a composite material part comprising the following steps:
- creating a fibrous preform (500) conforming to the manufacturing process for a fibrous preform according to any one of claims 1 to 6,
- injecting a liquid composition (730) comprising at least one matrix material precursor into the fibrous preform (500),
- transforming the liquid composition into matrix so as to obtain a composite material part (100) comprising a fibrous reinforcement densified by a matrix.

8. Use of the process according to claim 7 for the manufacture of a turbomachine blade of composite material (100).
